# EUROPEAN PATENT APPLICATION

(11) **EP 3 082 306 A1**
(43) Date of publication of application: **19.10.2016**
(21) Application number: 14878119.8
(22) Date of filing: 07.01.2014
(51) Int. Cl.: H04L 12/703

(54) **RE-ROUTING METHOD AND SYSTEM, AND NETWORK DEVICE**

(71) Applicant: Huawei Technologies Co., Ltd., Longgang District Shenzhen, Guangdong 518129 (CN)
(72) Inventor: SUI, Zhicheng, Shenzhen Guangdong 518129 (CN)
(74) Representative: Pfenning, Meinig & Partner mbB
(86) International application number: PCT/CN2014/070225
(87) International publication number: WO 2015/103729

(57) **Abstract**

The present invention discloses a rerouting method and system, and a network device. The rerouting method includes: receiving, by a network device, a preset rerouting search message sent by a source node of a service, where the preset rerouting search message includes information about a faulty entity, an identifier of the service, and information about a first preset rerouting path; determining a non-faulty path of the service according to the information about the faulty entity and the identifier of the service; if it is determined that the first preset rerouting path is not completely separated from the non-faulty path of the service, searching a preset routing table, corresponding to the faulty entity, of the service to acquire a second preset rerouting path that does not pass through the faulty entity and has the fewest entities overlapping with entities in the non-faulty path of the service; and if it is determined that the second preset rerouting path is different from the first preset rerouting path, sending a first response message to the source node of the service. According to the foregoing disclosed content, in the present invention, under any 2-connected physical topology of an ASON network, a preset rerouting path that is completely separated from a non-faulty path is established, thereby ensuring that switchover is implemented within 50 ms after the second fault, and ensuring high reliability of a service.

## Description

### TECHNICAL FIELD

The present invention relates to the field of communications, and in particular, to a rerouting method and system, and a network device.

### BACKGROUND

The survivability of an ASON (Automatically Switched Optical Network, automatically switched optical network) may be classified into protection and recovery according to whether resources are dedicated. 1+1 protection is dedicated protection for dual-transmit resources. After a working path is faulty, it can be ensured that a service is switched over to a protection path within 50 ms after the first fault, which can satisfy requirements of carrier-grade reliability. However, in practice, there is a 1+1 service (for example, communication services such as private lines for the stock market and the bank) having higher reliability requirements. The service not only requires that a service can be switched over within 50 ms after the first fault, but also requires that the service can still be recovered within 50 ms after the second fault, imposing a higher requirement on the network and protocol.

If there are two completely separated paths between any two nodes in a network topology, the network topology is referred to as a 2-connected network topology. When the 2-connected physical topology satisfies a strict 3-connected requirement, the ASON network can compute three completely separated paths, which therefore can satisfy the high reliability requirement that recovery is implemented within 50 ms after the second fault. However, an actual physical topology of a customer network can hardly satisfy an anti-second fault requirement and a completely 3-connected requirement. In this case, when a recovery path is rerouted according to a pre-computed preset rerouting path, because preset working and protection rerouting paths are not associated with a specific fault scenario, an available preset rerouting path is selected after a fault, and there may be an overlapping link between this preset rerouting path and an existing path (a working path or a protection path that is not faulty). Then, when the second fault occurs, both of this preset rerouting path and the existing path may be interrupted, and in this case, it cannot be ensured that the service is switched over within 50 ms after the second fault.

Therefore, in a case in which available network resources are insufficient or a physical topology does not satisfy a requirement, in the prior art, a preset rerouting path that is completely separated from an existing path cannot be established. As a result, it cannot be ensured that a service is switched over within 50 ms after the second fault, and the requirement of high reliability cannot be ensured.

### SUMMARY

In view of this, embodiments of the present invention provide a rerouting method and system, and a network device, so that under any 2-connected physical topology of an ASON network, a preset rerouting path that is completely separated from a non-faulty path is established, thereby ensuring that switchover is implemented within 50 ms after the second fault, and ensuring high reliability of a service.

A first aspect provides a rerouting method, including: receiving, by a network device, a preset rerouting search message sent by a source node of a service, where the preset rerouting search message includes information about a faulty entity, an identifier of the service, and information about a first preset rerouting path; determining a non-faulty path of the service according to the information about the faulty entity and the identifier of the service; if it is determined that the first preset rerouting path is not completely separated from the non-faulty path of the service, searching a preset routing table, corresponding to the faulty entity, of the service to acquire a second preset rerouting path, where the second preset rerouting path does not pass through the faulty entity, and has the fewest entities overlapping with entities in the non-faulty path of the service; and if it is determined that the second preset rerouting path is different from the first preset rerouting path, sending a first response message to the source node of the service, where the first response message carries indication information for updating a preset rerouting path, and information about the second preset rerouting path.

With reference to the implementation manner of the first aspect, in a first possible implementation manner, after the determining a non-faulty path of the service, the method further includes: if it is determined that the first preset rerouting path is completely separated from the non-faulty path of the service, sending a second response message to the source node of the service, where the second response message carries indication information for not updating a preset rerouting path.

With reference to the first aspect or the first possible implementation manner of the first aspect, in a second possible implementation manner, after the acquiring a second preset rerouting path, the method further includes: if it is determined that the second preset rerouting path is the same as the first preset rerouting path, sending the second response message to the source node of the service.

With reference to the first aspect, or the first possible implementation manner, or the second possible implementation manner of the first aspect, in a third possible implementation manner, the determining a non-faulty path of the service according to the information about the faulty entity and the identifier of the service specifically includes: if it is determined, according to the information about the faulty entity, that a working path of the service is faulty, the non-faulty path of the service is a protection path of the service; or if it is determined, according to the information about the faulty entity, that a protection path of the service is faulty, the non-faulty path of the service is a working path of the service.

With reference to the first aspect, or the first possible implementation manner, or the second possible implementation manner, or the third possible implementation manner of the first aspect, in a fourth possible implementation manner, the searching a preset routing table, corresponding to the information about the faulty entity, of the service to acquire a second preset rerouting path specifically includes: searching the preset routing table corresponding to the information about the faulty entity; and if the corresponding preset routing table is empty, computing, in real time, a new preset rerouting path to serve as the second preset rerouting path; or if the corresponding preset routing table is not empty, directly acquiring an existing preset rerouting path to serve as the second preset rerouting path.

A second aspect provides a rerouting method, including: if a working path or a protection path of a service is faulty, sending a preset rerouting search message to a network device, so that if it is determined that a first preset rerouting path is not completely separated from a non-faulty path of the service, the network device searches a preset routing table, corresponding to a faulty entity, of the service to acquire a second preset rerouting path, where the preset rerouting search message includes information about the faulty entity, an identifier of the service, and information about the first preset rerouting path; and the second preset rerouting path does not pass through the faulty entity, and has the fewest entities overlapping with entities in the non-faulty path of the service; receiving a first response message sent by the network device, where the first response message carries indication information for updating a preset rerouting path, and information about the second preset rerouting path; and initiating establishment of the second preset rerouting path.

With reference to the second aspect, in a first possible implementation manner, before the sending a preset rerouting search message to a network device, establishment of the first preset rerouting path is initiated.

A third aspect provides a network device, including: a receiving module, configured to receive a preset rerouting search message sent by a source node of a service, where the preset rerouting search message includes information about a faulty entity, an identifier of the service, and information about a first preset rerouting path; a determining module, configured to determine a non-faulty path of the service according to the information about the faulty entity and the identifier of the service; a path acquiring module, configured to: if it is determined that the first preset rerouting path is not completely separated from the non-faulty path of the service, search a preset routing table, corresponding to the faulty entity, of the service to acquire a second preset rerouting path, where the second preset rerouting path does not pass through the faulty entity, and has the fewest entities overlapping with entities in the non-faulty path of the service; and a sending module, configured to: if it is determined that the second preset rerouting path is different from the first preset rerouting path, send a first response message to the source node of the service, where the first response message carries indication information for updating a preset rerouting path, and information about the second preset rerouting path.

With reference to the third aspect, in a first possible implementation manner, the sending module is further configured to: after the path acquiring module determines that the first preset rerouting path is completely separated from the non-faulty path of the service, send a second response message to the source node of the service, where the second response message carries indication information for not updating a preset rerouting path.

With reference to the third aspect or the first possible implementation manner of the third aspect, in a second possible implementation manner, after the path acquiring module acquires the second preset rerouting path, if it is determined that the second preset rerouting path is the same as the first preset rerouting path, the sending module further sends the second response message to the source node of the service.

With reference to the third aspect, the first possible implementation manner, or the second possible implementation manner of the third aspect, in a third possible implementation manner, the determining module is specifically configured to: if it is determined, according to the information about the faulty entity, that a working path of the service is faulty, determine that the non-faulty path of the service is a protection path of the service; or if it is determined, according to the information about the faulty entity, that a protection path of the service is faulty, determine that the non-faulty path of the service is a working path of the service.

With reference to the third aspect, in a fourth possible implementation manner, the path acquiring module is specifically configured to: search the preset routing table corresponding to the information about the faulty entity; and if the corresponding preset routing table is empty, compute, in real time, a new preset rerouting path to serve as the second preset rerouting path; or if the corresponding preset routing table is not empty, directly acquire an existing preset rerouting path to serve as the second preset rerouting path.

A fourth aspect provides a node, including: a sending module, configured to: if a working path or a protection path of a service is faulty, send a preset rerouting search message to a network device, so that if it is determined that a first preset rerouting path is not completely separated from a non-faulty path of the service, the network device searches a preset routing table, corresponding to a faulty entity, of the service to acquire a second preset rerouting path, where the preset rerouting search message includes information about the faulty entity, an identifier of the service, and information about the first preset rerouting path; and the second preset rerouting path does not pass through the faulty entity, and has the fewest entities overlapping with entities in the non-faulty path of the service; a receiving module, configured to receive a first response message sent by the network device, where the first response message carries indication information for updating a preset rerouting path, and information about the second preset rerouting path; and a rerouting module, configured to initiate establishment of the second preset rerouting path.

With reference to the fourth aspect, in a first possible implementation manner, the rerouting module is configured to: before the sending module sends the preset rerouting search message to the network device, initiate establishment of the first preset rerouting path.

A fifth aspect provides a rerouting system, including a network device and a node, where the network device is the network device described in any one of the third aspect, and the first possible implementation manner, the second possible implementation manner, and the third possible implementation manner of the third aspect, and the node is the node described in the fourth aspect or the first possible implementation manner of the fourth aspect.

In the present invention, a network device receives a preset rerouting search message sent by a source node of a service, where the preset rerouting search message includes information about a faulty entity, an identifier of the service, and information about a first preset rerouting path; determines a non-faulty path of the service according to the information about the faulty entity and the identifier of the service; when further determining that the first preset rerouting path is not completely separated from the non-faulty path of the service, searches a preset routing table, corresponding to the faulty entity, of the service to acquire a second preset rerouting path that does not pass through the faulty entity and has the fewest entities overlapping with entities in the non-faulty path of the service; and if it is determined that the second preset rerouting path is different from the first preset rerouting path, sends a first response message to the source node of the service, where the first response message carries indication information for updating a preset rerouting path, and information about the second preset rerouting path. In this way, under any 2-connected physical topology of an ASON network, a preset rerouting path that is completely separated from a non-faulty path is established, thereby ensuring that switchover is implemented within 50 ms after the second fault, and ensuring high reliability of a service.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of a rerouting method in the prior art;
FIG. 2 is a schematic flowchart of a rerouting method according to a first embodiment of the present invention;
FIG. 3 is a schematic flowchart of a rerouting method according to a second embodiment of the present invention;
FIG. 4 is a schematic structural diagram of a network device according to the present invention;
FIG. 5 is a schematic structural diagram of a node according to the present invention;
FIG. 6 is a schematic structural diagram of another network device according to the present invention;
FIG. 7 is a schematic structural diagram of another node according to the present invention;
FIG. 8 is a schematic diagram of the rerouting method according to the first embodiment of the present invention; and
FIG. 9 is a schematic diagram of the rerouting method according to the second embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

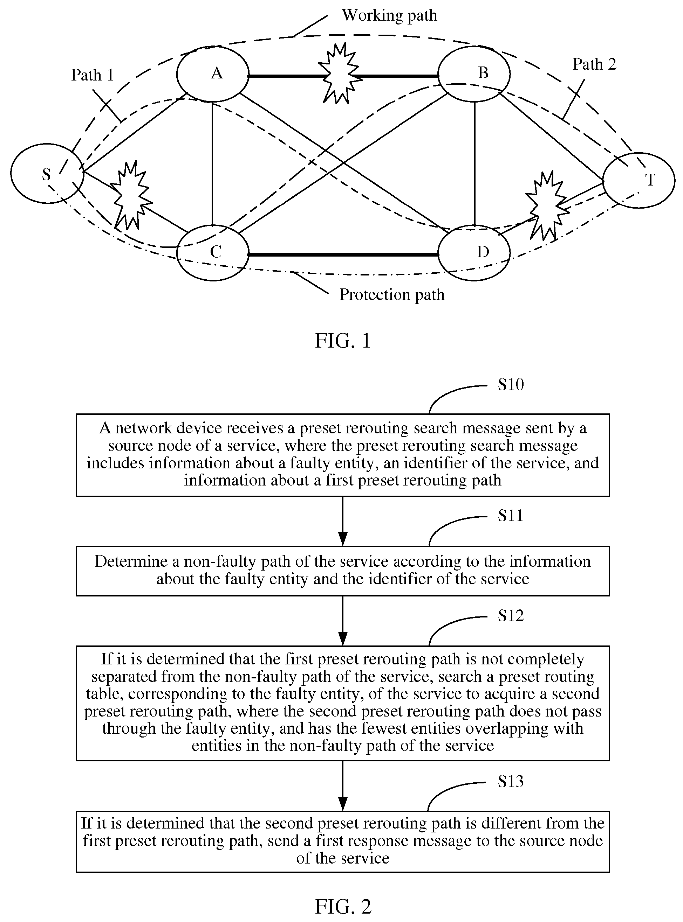

In the prior art, as shown in FIG. 1 a network is formed by six nodes, namely, S, A, B, C, D, and T, and solid lines between the nodes represent fiber links. A working path of a service S-T is S-A-B-T, a protection path is S-C-D-T, and there are a preset rerouting path 1 of S-A-D-T and a preset rerouting path 2 of S-C-B-T. When a link A-B in the working path S-A-B-T is faulty for the first time, the source node S switches the service S-T over to the protection path S-C-D-T within 50 ms, and reroutes the working path to a first available working preset rerouting path 1, or reroutes the working path to an available working preset rerouting path 2. The preset rerouting path 1 and the protection path have the same link D-T, and the preset rerouting path 2 and the protection path have the same link S-C. If the source node S switches over to the working preset rerouting path 1, during the second fault when the link D-T is interrupted, it must be caused that the protection path and the preset rerouting path 1 are interrupted at the same time, and then a recovery path needs to be computed for the service temporarily, which cannot ensure that recovery is implemented within 50 ms after the second fault, thereby causing downgrading of the service. Similarly, if the source node S switches over to the working preset rerouting path 2, during the second fault when the link S-C is interrupted, it must be caused that the protection path and the preset rerouting path 2 are interrupted at the same time, which also cannot ensure that recovery is implemented within 50 ms after the second fault, thereby causing downgrading of the service.

Referring to FIG. 2, FIG. 2 is a schematic flowchart of a rerouting method according to a first embodiment of the present invention. As shown in FIG. 2, the rerouting method includes:
S10: A network device receives a preset rerouting search message sent by a source node of a service, where the preset rerouting search message includes information about a faulty entity, an identifier of the service, and information about a first preset rerouting path.
   The network device may be a path computation element (Path Computation Element, PCE), or may be another path computation apparatus. The source node is a start node of a routing path of the service, and a working path, a protection path, and a preset rerouting path of a same service have a same source node. The preset rerouting search message may include the faulty entity, the identifier of the service, and the information about the first preset rerouting path, and the message may be implemented by extending a PCReq message in the PCEP protocol. The faulty entity may be a faulty link or node, or a faulty link group sharing risks.
S11: Determine a non-faulty path of the service according to the information about the faulty entity and the identifier of the service.
   The non-faulty path is a path that starts from the source node, and does not pass through the faulty entity. The network device may pre-store an identifier of a service, source and sink nodes of the corresponding service, routing information of working and protection paths of the service. After receiving the preset rerouting search message, the network device may learn source and sink nodes of the service and routing information of working and protection paths of the service according to the identifier of the service, so as to further determine the non-faulty path of the service according to the information about the faulty entity.
S12: If it is determined that the first preset rerouting path is not completely separated from the non-faulty path of the service, search a preset routing table, corresponding to the faulty entity, of the service to acquire a second preset rerouting path, where the second preset rerouting path does not pass through the faulty entity, and has the fewest entities overlapping with entities in the non-faulty path of the service.
   That the first preset rerouting path is not completely separated from the non-faulty path of the service refers to that the first preset rerouting path does not pass through the faulty entity, and has at least one overlapping link with the non-faulty path of the service. The second preset rerouting path does not pass through the faulty entity, and has the fewest entities overlapping with entities in the non-faulty path of the service. The overlapping entity may be an overlapping link or node, or an overlapping link group sharing risks.
S13: If it is determined that the second preset rerouting path is different from the first preset rerouting path, send a first response message to the source node of the service.

The first response message carries indication information for updating a preset rerouting path and information about the second preset rerouting path. The first response message may be implemented by extending a PCRep message in the PCEP protocol.

Therefore, in this embodiment, when a working path or protection path of a service is faulty, a network device receives a preset rerouting search message sent by a source node of the service, where the preset rerouting search message includes information about a faulty entity, an identifier of the service, and information about a first preset rerouting path; determines a non-faulty path of the service according to the information about the faulty entity and the identifier of the service; when further determining that the first preset rerouting path is not completely separated from the non-faulty path of the service, searches a preset routing table, corresponding to the faulty entity, of the service to acquire a second preset rerouting path; and when determining that the second preset rerouting path is different from the first preset rerouting path, sends a first response message to the source node of the service. In this way, under any 2-connected physical topology of an ASON network, a preset rerouting path that is completely separated from a non-faulty path is established, thereby ensuring that switchover is implemented within 50 ms after the second fault, and ensuring high reliability of a service.

In a more specific embodiment, the faulty path may be a working path of the service, or may be a protection path of the service. In S11, when the non-faulty path of the service is determined according to the information about the faulty entity and the identifier of the service, if it is determined, according to the information about the faulty entity, that the working path of the service is faulty, the non-faulty path of the service is the protection path of the service; or if it is determined, according to the information about the faulty entity, that the protection path of the service is faulty, the non-faulty path of the service is the working path of the service. In this embodiment of the present invention, when the working path is faulty, the source node switches over to the protection path within 50 ms when a fault occurs.

In S12, if it is determined that the first preset rerouting path is not completely separated from the non-faulty path of the service, a preset routing table, corresponding to the faulty entity, of the service is searched to acquire the second preset rerouting path; or if it is determined that the first preset rerouting path is completely separated from the non-faulty path of the service, a second response message is sent to the source node of the service, where the second response message carries indication information for not updating a preset rerouting path.

The searching a preset routing table, corresponding to the faulty entity, of the service to acquire a second preset rerouting path specifically includes: first searching the preset routing table corresponding to the information about the faulty entity; and if the corresponding preset routing table is empty, which indicates that the network device does not pre-compute the faulty preset rerouting path, computing, in real time, a new preset rerouting path to serve as the second preset rerouting path; or if the corresponding preset routing table is not empty, which indicates that the network device already computes the faulty preset rerouting path, directly acquiring an existing preset rerouting path to serve as the second preset rerouting path. During acquiring of the second preset routing path, only in a case in which after the preset routing table corresponding to the information about the faulty entity is searched, there is no second preset rerouting path that is completely separated from the non-faulty path, the second preset rerouting path that is not completely separated from the non-faulty path is acquired, where the second preset rerouting path does not pass through the faulty entity, and has the fewest entities overlapping with entities in the non-faulty path of the service.

In this embodiment of the present invention, after the second preset routing path is acquired, it is determined whether the second preset rerouting path is the same as the first preset rerouting path, and if it is determined that the second preset rerouting path is different from the first preset rerouting path, the first response message is sent to the source node of the service; or if it is determined that the second preset rerouting path is the same as the first preset rerouting path, the second response message is sent to the source node of the service. The first response message carries the indication information for updating a preset rerouting path, and the information about the second preset rerouting path, and the second response message carries the indication information for not updating a preset rerouting path.

In this embodiment of the present invention, the indication information, for updating a preset rerouting path, in the first response message and the indication information, for not updating a preset rerouting path, in the second response message may be represented by using a same identifier, for example, may be represented by using "using an identifier of a current preset rerouting path", where when the "using an identifier of a current preset rerouting path" is set to "Yes", it represents the indication information, for not updating a preset rerouting path, in the second response message; and when the "using an identifier of a current preset rerouting path" is set to "No", it represents the indication information, for updating a preset rerouting path, in the first response message. In this case, the sending the first response message or the second response message to the source node of the service may be implemented by sending a preset rerouting confirmation message to the source node of the service. The preset rerouting confirmation message includes the "using an identifier of a current preset rerouting path" and the information about the second preset rerouting path, and when the "using an identifier of a current preset rerouting path" is "Yes", the information about the second preset rerouting path is empty.

In this embodiment of the present invention, when a working path or protection path of a service is faulty, a network device receives a preset rerouting search message sent by a source node of the service, where the preset rerouting search message includes information about a faulty entity, an identifier of the service, and information about a first preset rerouting path; determines a non-faulty path of the service according to the information about the faulty entity and the identifier of the service; when further determining that the first preset rerouting path is not completely separated from the non-faulty path of the service, searches a preset routing table, corresponding to a faulty entity, of the service to acquire a second preset rerouting path; and when determining that the second preset rerouting path is different from the first preset rerouting path, sends a first response message to the source node of the service. In this way, under any 2-connected physical topology of an ASON network, a preset rerouting path that is completely separated from a non-faulty path is established, thereby ensuring that switchover is implemented within 50 ms after the second fault, and ensuring high reliability of a service.

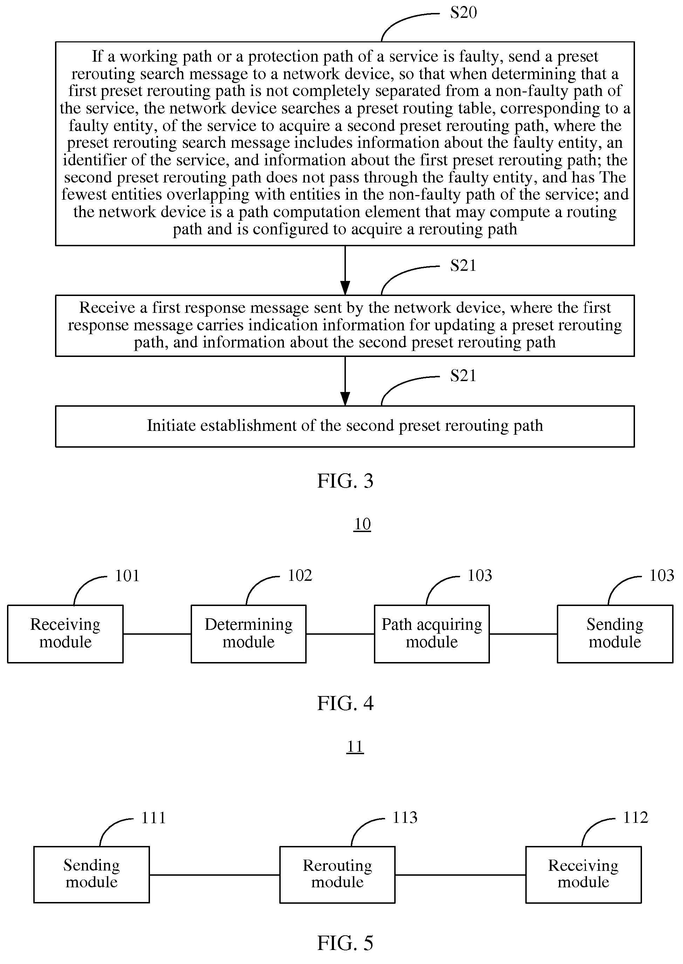

Referring to FIG. 3, FIG. 3 is a schematic flowchart of a rerouting method according to a second embodiment of the present invention. As shown in FIG. 3, the rerouting method includes:
S20: If a working path or a protection path of a service is faulty, send a preset rerouting search message to a network device, so that when determining that a first preset rerouting path is not completely separated from a non-faulty path of the service, the network device searches a preset routing table, corresponding to a faulty entity, of the service to acquire a second preset rerouting path, where the preset rerouting search message includes information about the faulty entity, an identifier of the service, and information about the first preset rerouting path, and the second preset rerouting path does not pass through the faulty entity, and has the fewest entities overlapping with entities in the non-faulty path of the service, and the network device may be a path computation element, or may be another rerouting path computation apparatus.
   In S20, if the working path or the protection path of the service is faulty, the preset routing table of the service in the source node is searched to acquire the first preset rerouting path. If there is no available preset rerouting path in the preset routing table of the service in the source node, a dynamic rerouting path computation request is sent to the network device directly. Optionally, before the preset rerouting search message is sent to the network device, establishment of the first preset rerouting path is initiated, where the establishment may be implemented by using a Path message of the RSVP-TE, so that rapid switchover is implemented in most scenarios.
S21: Receive a first response message sent by the network device, where the first response message carries indication information for updating a preset rerouting path, and information about the second preset rerouting path.
   In this embodiment of the present invention, if the first response message sent by the network device is received, it represents that the first preset rerouting path is not completely separated from the non-faulty path of the service, and the second preset rerouting path is different from the first preset rerouting path. If the first preset rerouting path is completely separated from the non-faulty path of the service, or the second preset rerouting path is the same as the first preset rerouting path, a second response message sent by the network device is received, where the second response message carries indication information for not updating a preset rerouting path.
S22: Initiate establishment of the second preset rerouting path.
   In S22, if the first response message sent by the network device is received, that is, the indication information for updating a preset rerouting path is received, the establishment of the second preset rerouting path is initiated, where the establishment may be implemented by using a Path message of the RSVP-TE. If the second response message sent by the network device is received, that is, the indication information for not updating a preset rerouting path is received, it is checked whether the establishment of the first preset rerouting path is already initiated; if the establishment of the first preset rerouting path is already initiated, the process ends; or, if the establishment of the first preset rerouting path is not initiated yet, the establishment of the first preset rerouting path is initiated, and where the establishment may be implemented by using a Path message in the RSVP-TE. In this embodiment of the present invention, because in most scenarios, the second response message sent by the network device is received, that is, the indication information for not updating a preset rerouting path is received, the establishment of the first preset rerouting path can be initiated before the preset rerouting search message is sent to the network device, thereby implementing rapid switchover.

In this embodiment of the present invention, when a working path or a protection path of a service is faulty, a preset rerouting search message is sent to a network device, so that when determining that a first preset rerouting path is not completely separated from a non-faulty path of the service, the network device searches a preset routing table, corresponding to a faulty entity, of the service to acquire a second preset rerouting path; then, a first response message sent by the network device is received, where the first response message carries indication information for updating a preset rerouting path, and information about the second preset rerouting path, and establishment of the second preset rerouting path is initiated. In this way, under any 2-connected physical topology of an ASON network, a preset rerouting path that is completely separated from a non-faulty path is established, thereby ensuring that switchover is implemented within 50 ms after the second fault, and ensuring high reliability of a service.

Referring to FIG. 4, FIG. 4 is a schematic structural diagram of a network device. As shown in FIG. 4, the network device 10 includes a receiving module 101, a determining module 102, a path acquiring module 103, and a sending module 104. The receiving module 101 is configured to receive a preset rerouting search message sent by a source node of a service, where the preset rerouting search message includes information about a faulty entity, an identifier of the service, and information about a first preset rerouting path. The determining module 102 is connected to the receiving module 101, and is configured to determine a non-faulty path of the service according to the information about the faulty entity and the identifier of the service. The path acquiring module 103 is connected to the determining module 102, and is configured to: when determining that the first preset rerouting path is not completely separated from the non-faulty path of the service, search a preset routing table, corresponding to the faulty entity, of the service to acquire a second preset rerouting path. The sending module 104 is connected to the path acquiring module 103, and is configured to: when determining that the second preset rerouting path is different from the first preset rerouting path, send a first response message to the source node of the service, where the second preset rerouting path does not pass through the faulty entity, and has the fewest entities overlapping with entities in the non-faulty path of the service. The first response message carries indication information for updating a preset rerouting path, and information about the second preset rerouting path, and may be implemented by extending a PCRep message in the PCEP protocol.

In this embodiment of the present invention, the source node is a start node of a routing path of the service, and a working path, a protection path, and a preset rerouting path of a same service have a same source node. The preset rerouting search message may include the faulty entity, the identifier of the service, and the information about the first preset rerouting path, and may be implemented by extending a PCReq message in the PCEP protocol. The faulty entity may be a faulty link or node, or a faulty link group sharing risks.

In this embodiment of the present invention, the determining module 102 is specifically configured to: when determining the non-faulty path of the service, if determining according to the information about the faulty entity that a working path of the service is faulty, determine that the non-faulty path of the service is a protection path of the service; or if determining according to the information about the faulty entity that a protection path of the service is faulty, determine that the non-faulty path of the service is a working path of the service.

The sending module 104 is further configured to: after the path acquiring module 103 determines that the first preset rerouting path is completely separated from the non-faulty path of the service, send a second response message to the source node of the service, where the second response message carries indication information for not updating a preset rerouting path.

The path acquiring module 103 is specifically configured to: during acquiring of the second preset rerouting path, first search the preset routing table corresponding to the information about the faulty entity; and if the corresponding preset routing table is empty, compute, in real time, a new preset rerouting path to serve as the second preset rerouting path; or if the corresponding preset routing table is not empty, directly acquire an existing preset rerouting path to serve as the second preset rerouting path. Only in a case in which after the preset routing table corresponding to the information about the faulty entity is searched, there is no second preset rerouting path that is completely separated from the non-faulty path, the path acquiring module 103 acquires the second preset rerouting path that is not completely separated from the non-faulty path, where the second preset rerouting path does not pass through the faulty entity, and has the fewest entities overlapping with entities in the non-faulty path of the service.

In this embodiment of the present invention, the sending module 104 is further configured to: after the path acquiring module acquires the second preset rerouting path, when determining that the second preset rerouting path is the same as the first preset rerouting path, send the second response message to the source node of the service.

After the path acquiring module 103 acquires the second preset routing path, the sending module 104 determines whether the second preset rerouting path is the same as the first preset rerouting path, and if determining that the second preset rerouting path is different from the first preset rerouting path, the sending module 104 sends the first response message to the source node of the service; or if determining that the second preset rerouting path is the same as the first preset rerouting path, the sending module 104 sends the second response message to the source node of the service.

In this embodiment of the present invention, when a working path or protection path of a service is faulty, the receiving module 101 receives a preset rerouting search message sent by a source node of the service, where the preset rerouting search message includes information about a faulty entity, an identifier of the service, and information about a first preset rerouting path; the determining module 102 determines a non-faulty path of the service according to the information about the faulty entity and the identifier of the service; when further determining that the first preset rerouting path is not completely separated from the non-faulty path of the service, the path acquiring module 103 searches a preset routing table, corresponding to the faulty entity, of the service to acquire a second preset rerouting path; and when determining that the second preset rerouting path is different from the first preset rerouting path, the sending module 104 sends a first response message to the source node of the service. In this way, under any 2-connected physical topology of an ASON network, a preset rerouting path that is completely separated from a non-faulty path is established, thereby ensuring that switchover is implemented within 50 ms after the second fault, and ensuring high reliability of a service.

Referring to FIG. 5, FIG. 5 is a schematic structural diagram of a node. As shown in FIG. 5, the node 11 includes a sending module 111, a receiving module 112, and a rerouting module 113. The sending module 111 is configured to: if a working path or a protection path of a service is faulty, send a preset rerouting search message to a network device, so that when determining that a first preset rerouting path is not completely separated from a non-faulty path of the service, the network device searches a preset routing table, corresponding to a faulty entity, of the service to acquire a second preset rerouting path; the receiving module 112 is configured to receive a first response message sent by the network device; and the rerouting module 113 is separately connected to the sending module 111 and the receiving module 112, and is configured to initiate establishment of the second preset rerouting path, where the preset rerouting search message includes information about the faulty entity, an identifier of the service, and information about the first preset rerouting path, and the second preset rerouting path does not pass through the faulty entity, and has the fewest entities overlapping with entities in the non-faulty path of the service, and the first response message carries indication information for updating a preset rerouting path, and information about the second preset rerouting path. The network device may be a path computation element, or may be another rerouting path computation apparatus. In this embodiment, the node 11 may be the source node of the service.

In this embodiment of the present invention, if the working path or the protection path of the service is faulty, the sending module 111 searches the preset routing table of the service in the source node to acquire the first preset rerouting path. If there is no available preset rerouting path in the preset routing table of the service in the source node, the sending module 111 directly sends a dynamic rerouting path computation request to the network device. Optionally, before the sending module 111 sends the preset rerouting search message to the network device, the rerouting module 113 initiates establishment of the first preset rerouting path, where the establishment may be implemented by using a Path message of the RSVP-TE, so that rapid switchover is implemented in most scenarios.

In this embodiment of the present invention, if the receiving module 112 receives the first response message sent by the network device, it represents that the first preset rerouting path is not completely separated from the non-faulty path of the service, and the second preset rerouting path is different from the first preset rerouting path. If the first preset rerouting path is completely separated from the non-faulty path of the service, or the second preset rerouting path is the same as the first preset rerouting path, the receiving module 112 receives a second response message sent by the network device, where the second response message carries indication information for not updating a preset rerouting path.

If the receiving module 112 receives the first response message sent by the network device, that is, receives the indication information for updating a preset rerouting path, the rerouting module 113 initiates the establishment of the second preset rerouting path. If the receiving module 112 receives the second response message sent by the network device, that is, receives the indication information for not updating a preset rerouting path, the rerouting module 113 checks whether the establishment of the first preset rerouting path is initiated; and if the establishment of the first preset rerouting path is initiated, ends the process; or if the establishment of the first preset rerouting path is not initiated, the rerouting module 113 initiates the establishment of the first preset rerouting path. In this embodiment of the present invention, because in most scenarios, the second response message sent by the network device is received, that is, the indication information for not updating a preset rerouting path is received, the rerouting module 113 can initiate the establishment of the first preset rerouting path before the preset rerouting search message is sent to the network device, thereby implementing rapid switchover.

In this embodiment of the present invention, if a working path or a protection path of a service is faulty, the sending module 111 sends a preset rerouting search message to a network device, so that when determining that a first preset rerouting path is not completely separated from a non-faulty path of the service, the network device searches a preset routing table, corresponding to a faulty entity, of the service to acquire a second preset rerouting path; the receiving module 112 receives a first response message sent by the network device, where the first response message carries indication information for updating a preset rerouting path, and information about the second preset rerouting path; and the rerouting module 113 initiates establishment of the second preset rerouting path. In this way, under any 2-connected physical topology of an ASON network, a preset rerouting path that is completely separated from a non-faulty path is established, thereby ensuring that switchover is implemented within 50 ms after the second fault, and ensuring high reliability of a service.

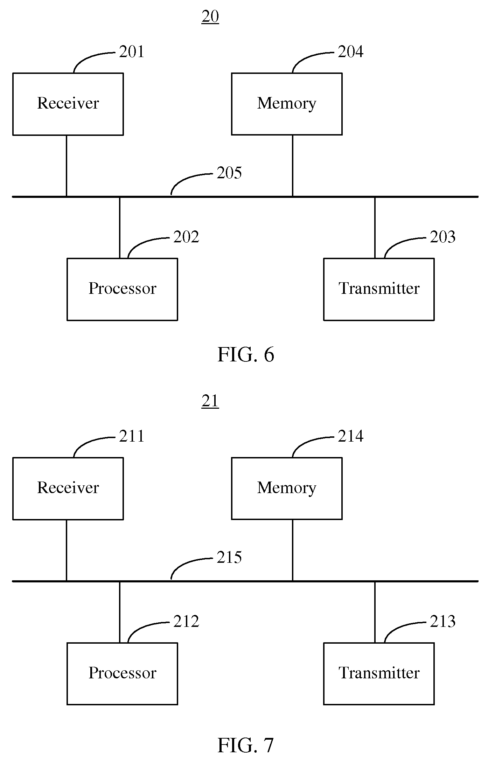

Referring to FIG. 6, FIG. 6 is a schematic structural diagram of another network device. As shown in FIG. 6, the network device 20 includes a receiver 201, a processor 202, a transmitter 203, a memory 204, and a data bus 205, where the receiver 201, the processor 202, the transmitter 203, and the memory 204 are connected by using the data bus 205, so as to perform mutual communication. The network device 20 may be a path computation element, or may be another rerouting path computation apparatus.

In this embodiment of the present invention, the receiver 201 is configured to receive a preset rerouting search message sent by a source node of a service, where the preset rerouting search message includes information about a faulty entity, an identifier of the service, and information about a first preset rerouting path.

The memory 204 is configured to store information about a program routine.

The processor 202 is coupled to the memory 204, the receiver 201, and the transmitter 203, and is configured to control execution of the program routine, specifically including: determining a non-faulty path of the service according to the information about the faulty entity and the identifier of the service; determining that the first preset rerouting path is not completely separated from the non-faulty path of the service, search a preset routing table, corresponding to the faulty entity, of the service to acquire a second preset rerouting path, where the second preset rerouting path does not pass through the faulty entity, and has the fewest entities overlapping with entities in the non-faulty path of the service.

After determining that the second preset rerouting path is different from the first preset rerouting path, the transmitter 203 sends a first response message to the source node of the service, where the first response message carries indication information for updating a preset rerouting path, and information about the second preset rerouting path, and may be implemented by extending a PCRep message in the PCEP protocol.

In this embodiment of the present invention, the preset rerouting search message may include the faulty entity, the identifier of the service, and the information about the first preset rerouting path, and may be implemented by extending a PCReq message in the PCEP protocol. The faulty entity may be a faulty link or node, or a faulty link group sharing risks. In this embodiment of the present invention, when determining the non-faulty path of the service, if determining according to the information about the faulty entity that a working path of the service is faulty, the processor 202 determines that the non-faulty path of the service is a protection path of the service; or if determining according to the information about the faulty entity that a protection path of the service is faulty, the processor 202 determines that the non-faulty path of the service is a working path of the service.

The processor 202 further determines whether the first preset rerouting path is completely separated from the non-faulty path of the service, if the second preset rerouting path is not completely separated from the non-faulty path of the service, the processor 202 searches the preset routing table, corresponding to the faulty entity, of the service to acquire the second preset rerouting path; or if the first preset rerouting path is completely separated from the non-faulty path of the service, the transmitter 203 sends a second response message to the source node of the service, where the second response message carries indication information for not updating a preset rerouting path. During acquiring of the second preset rerouting path, the processor 202 first searches the preset routing table corresponding to the information about the faulty entity; and if the corresponding preset routing table is empty, computes, in real time, a new preset rerouting path to serve as the second preset rerouting path; or if the corresponding preset routing table is not empty, directly acquires an existing preset rerouting path to serve as the second preset rerouting path. Only in a case in which after the preset routing table corresponding to the information about the faulty entity is searched, there is no second preset rerouting path that is completely separated from the non-faulty path, the processor 202 acquires the second preset rerouting path that is not completely separated from the non-faulty path, where the second preset rerouting path does not pass through the faulty entity, and has the fewest entities overlapping with entities in the non-faulty path of the service.

The processor 202 further determines whether the second preset rerouting path is the same as the first preset rerouting path; if the second preset rerouting path is different from the first preset rerouting path, the transmitter 203 sends the first response message to the source node of the service; or if the second preset rerouting path is the same as the first preset rerouting path, the transmitter 203 sends the second response message to the source node of the service, where the second response message carries the indication information for not updating a preset rerouting path.

In this embodiment of the present invention, when a working path or a protection path of a service is faulty, the receiver 201 receives a preset rerouting search message sent by a source node of the service, where the preset rerouting search message includes information about a faulty entity, an identifier of the service, and information about a first preset rerouting path; the processor 202 determines a non-faulty path of the service according to the information about the faulty entity and the identifier of the service, and when the first preset rerouting path is not completely separated from the non-faulty path of the service, search a preset routing table, corresponding to the faulty entity, of the service to acquire a second preset rerouting path; after it is determined that the second preset rerouting path is different from the first preset rerouting path, the transmitter 203 sends a first response message to the source node of the service, where the first response message carries indication information for updating a preset rerouting path, and information about the second preset rerouting path. In this way, under any 2-connected physical topology of an ASON network, a preset rerouting path that is completely separated from a non-faulty path is established, thereby ensuring that switchover is implemented within 50 ms after the second fault, and ensuring high reliability of a service.

Referring to FIG. 7, FIG. 7 is a schematic structural diagram of another node. As shown in FIG. 7, the node 21 includes a receiver 211, a processor 212, a transmitter 213, a memory 214, and a data bus 215, where the receiver 211, the processor 212, the transmitter 213, and the memory 214 are connected by using the data bus 215, so as to perform mutual communication. In this embodiment, the node 21 may be a source node of a service.

In this embodiment of the present invention, if a working path or a protection path of a service is faulty, the transmitter 213 sends a preset rerouting search message to a network device, so that when determining that a first preset rerouting path is not completely separated from a non-faulty path of the service, the network device searches a preset routing table, corresponding to a faulty entity, of the service to acquire a second preset rerouting path. The receiver 211 receives a first response message sent by the network device.

The memory 214 is configured to store information about a program routine.

The processor 212 is coupled to the memory 214, the receiver 211, and the transmitter 213, and is configured to control execution of the program routine, specifically including: initiating establishment of the second preset rerouting path.

The preset rerouting search message includes information about the faulty entity, an identifier of a service, and information about a first preset rerouting path. The second preset rerouting path does not pass through the faulty entity, and has the fewest entities overlapping with entities in the non-faulty path of the service. The first response message carries indication information for updating a preset rerouting path and information about the second preset rerouting path. The network device may be a path computation element, or may be another rerouting path computation apparatus.

In this embodiment of the present invention, if the working path or the protection path of the service is faulty, the processor 212 searches the preset routing table of the service in the source node to acquire the first preset rerouting path. If there is no available preset rerouting path in the preset routing table of the service in the source node, the transmitter 213 directly sends a dynamic rerouting path computation request to the network device. Optionally, before the transmitter 213 sends the preset rerouting search message to the network device, the processor 212 initiates establishment of the first preset rerouting path, where the establishment may be implemented by using a Path message of the RSVP-TE, so that rapid switchover is implemented in most scenarios.

If the receiver 211 receives the first response message sent by the network device, it represents that the first preset rerouting path is not completely separated from the non-faulty path of the service, and the second preset rerouting path is different from the first preset rerouting path. If the first preset rerouting path is completely separated from the non-faulty path of the service, or the second preset rerouting path is the same as the first preset rerouting path, the receiver 211 receives a second response message sent by the network device, where the second response message carries indication information for not updating a preset rerouting path.

If the receiver 211 receives the first response message sent by the network device, that is, receives the indication information for updating a preset rerouting path, the processor 212 initiates the establishment of the second preset rerouting path. If the receiver 211 receives the second response message sent by the network device, that is, receives the indication information for not updating a preset rerouting path, the processor 212 checks whether the establishment of the first preset rerouting path is initiated; and if the establishment of the first preset rerouting path is initiated, ends the process; or if the establishment of the first preset rerouting path is not initiated, the processor 212 initiates the establishment of the first preset rerouting path. In this embodiment of the present invention, because in most scenarios, the second response message sent by the network device is received, that is, the indication information for not updating a preset rerouting path is received, the processor 212 can initiate the establishment of the first preset rerouting path before the preset rerouting search message is sent to the network device, thereby implementing rapid switchover.

In this embodiment of the present invention, if a working path or a protection path of a service is faulty, the transmitter 213 sends a preset rerouting search message to a network device, so that when determining that a first preset rerouting path is not completely separated from a non-faulty path of the service, the network device searches a preset routing table, corresponding to a faulty entity, of the service to acquire a second preset rerouting path; the receiver 211 receives a first response message sent by the network device; and the processor 212 initiates establishment of the second preset rerouting path. In this way, under any 2-connected physical topology of an ASON network, a preset rerouting path that is completely separated from a non-faulty path is established, thereby ensuring that switchover is implemented within 50 ms after the second fault, and ensuring high reliability of a service.

For the information exchange, and executing process between modules in the network device or node in the foregoing apparatus embodiments, because they are based on the same conception with the method embodiment of the present invention, for specific content, reference may be made to the descriptions of the method embodiment of the present invention, and details are not described herein again.

An embodiment of the present invention provides a rerouting system, including at least: a network device and a node.

The network device may be the network device 10 or the network device 20 in the foregoing embodiments, and the node may be the node 11 or the node 21 in the foregoing embodiments. For the information exchange, and executing process between the modules, because they are based on the same conception with the apparatus embodiment of the present invention, for specific content, reference may be made to the descriptions of the apparatus embodiment of the present invention, and details are not described herein again.

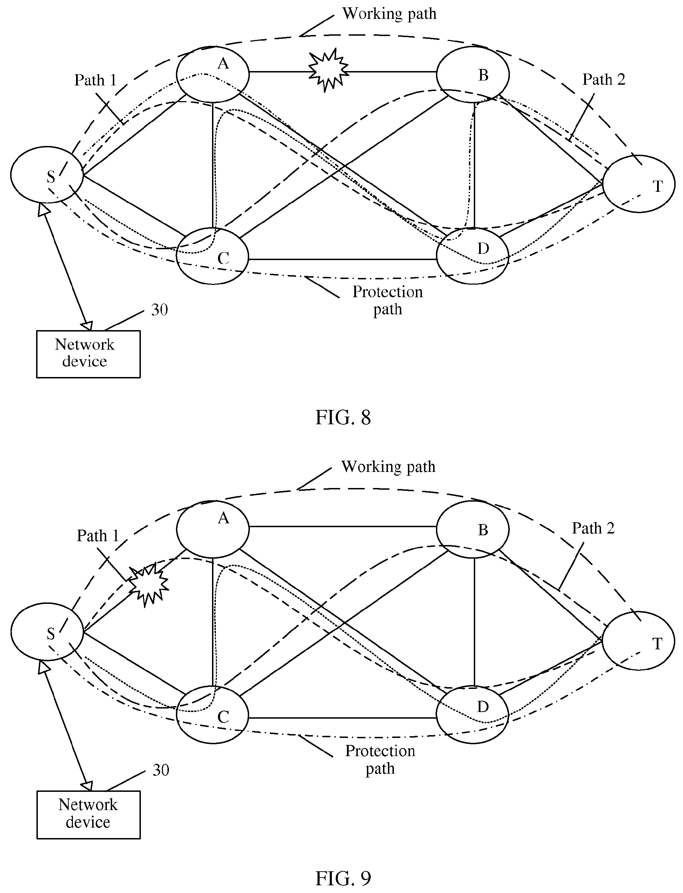

Referring to FIG. 8, FIG. 8 is a schematic diagram of the rerouting method according to the first embodiment of the present invention. As shown in FIG. 8, a network is formed by six nodes, namely, S, A, B, C, D, and T, and the network device 30. Solid lines between the nodes represent fiber links, where the node S is the source node. The network device is a path computation element, and may compute a routing path, and is configured to acquire a rerouting path. A working path of a service connection request S-T is S-A-B-T, and a protection path is S-C-D-T.

After a link A-B in the working path S-A-B-T is faulty, the source node S of the working path S-A-B-T detects that the working path S-A-B-T is faulty, and switches over to the protection path S-C-D-T within 50 ms, and searches a preset routing table of the service at the same time. There are two preset rerouting paths in the preset routing table of the service, namely, a path 1 of S-A-D-T and a path 2 of S-C-B-T. The two preset rerouting paths are both available, and the source node S sends a preset rerouting search message to the network device 30.

Using the preset rerouting path 1 of S-A-D-T as an example, the preset rerouting search message includes a faulty entity (a link A-B), an identifier of the service, and information about a first preset rerouting path. Optionally, before sending the preset rerouting search message to the network device 30, the source node S initiates establishment of the first preset rerouting path, that is, initiating a Path message of the RSVP-TE to reroute to the first preset rerouting path S-A-D-T. If there is no available preset rerouting path in the preset routing table of the service, the source node S directly sends a dynamic rerouting path computation request to the network device 30.

The network device 30 receives the preset rerouting search message sent by the source node S, and when determining that the first preset rerouting path S-A-D-T is not completely separated from the non-faulty path S-C-D-T of the service, that is, there is an overlapping link D-T, and they are not completely separated, searches the preset routing table, corresponding to the faulty entity, of the service to acquire a second preset rerouting path S-A-D-B-T, where the second preset rerouting path S-A-D-B-T does not pass through the faulty entity, and has the fewest entities overlapping with entities in the non-faulty path S-C-D-T of the service. When obtaining through checking that the second preset rerouting path S-A-D-B-T is different from the first preset rerouting path S-A-D-T, the network device 30 sends a first response message to the source node S of the service, where the first response message carries indication information for updating a preset rerouting path, and information about the second preset rerouting path. After receiving the first response message sent by the network device 30, the source node S initiates establishment of the second preset rerouting path S-A-D-B-T. The source node S may implement the establishment of the second preset rerouting path S-A-D-B-T by using the Path message of the RSVP-TE.

Therefore, in this embodiment of the present invention, when a working path is faulty, the source node S sends a preset rerouting search message to the network device 30, where the preset rerouting search message carries a faulty entity, an identifier of a service, and information about a first preset rerouting path; when determining that the first preset rerouting path S-A-D-T is not completely separated from a non-faulty path S-C-D-T of the service, the network device 30 searches a preset routing table, corresponding to the faulty entity, of the service to acquire a second preset rerouting path S-A-D-B-T; when obtaining through checking that the second preset rerouting path S-A-D-B-T is different from the first preset rerouting path S-A-D-T, the network device 30 sends a first response message to the source node S, where the first response message carries indication information for updating a preset rerouting path and information about the second preset rerouting path; and the source node S initiates establishment of the second preset rerouting path S-A-D-B-T. In this way, under any 2-connected physical topology of an ASON network, a preset rerouting path that is completely separated from a non-faulty path is established, thereby ensuring that switchover is implemented within 50 ms after the second fault, and ensuring high reliability of a service.

The present invention further provides the rerouting method of the second embodiment, and the rerouting method is described in detail based on the rerouting method of the first embodiment of the present invention. As shown in FIG. 9, after a link S-A in the working path S-A-B-T is faulty, a source node S of the working path S-A-B-T detects that the working path S-A-B-T is faulty, and switches over to a protection path S-C-D-T within 50 ms, and searches a preset routing table of a service at the same time. There are two preset rerouting paths in the preset routing table of the service, namely, a path 1 of S-A-D-T and a path 2 of S-C-B-T. The available preset rerouting path S-C-B-T is selected. The source node S sends a preset rerouting search message to the network device 30, where the preset rerouting search message carries a faulty entity (a link S-A), an identifier of the service, and information about a first preset rerouting path. Optionally, before sending the preset rerouting search message to the network device 30, the source node S initiates establishment of the first preset rerouting path S-C-B-T, that is, initiating a Path message of the RSVP-TE to reroute to the first preset rerouting path S-C-B-T. The network device 30 may be a path computation element, or may be another rerouting path computation apparatus.

The network device 30 receives the preset rerouting search message sent by the source node S, and when determining that the first preset rerouting path S-C-B-T is not completely separated from the protection path S-C-D-T of the service, that is, there is an overlapping link S-C, searches the preset routing table, corresponding to the faulty entity, of the service to acquire a second preset rerouting path S-C-B-T, where the second preset rerouting path S-C-B-T does not pass through the faulty entity, and has the fewest entities overlapping with entities in the non-faulty path S-C-D-T of the service.

When obtaining through checking that the second preset rerouting path S-C-B-T is different from the first preset rerouting path S-C-B-T, the network device 30 sends a second response message to the source node S of the service, where the second response message carries indication information for not updating a preset rerouting path, and information about the second preset rerouting path. After receiving the second response message sent by the network device 30, the source node S initiates establishment of the second preset rerouting path S-C-B-T. Specifically, it is checked whether establishment of the first preset rerouting path S-C-B-T is initiated; if the establishment of the first preset rerouting path S-C-B-T is initiated, it represents that before the preset rerouting search message is sent to the network device 30, the establishment of the first preset rerouting path S-C-B-T is initiated, and the process ends; if the establishment of the first preset rerouting path S-C-B-T is not initiated, the source node S initiates the establishment of the first preset rerouting path. Because in most scenarios, the source node S receives the second response message sent by the network device 30, that is, the indication information for not updating a preset rerouting path is received, the establishment of the first preset rerouting path can be initiated before the source node S sends the preset rerouting search message to the network device 30, thereby implementing rapid switchover.

Therefore, in this embodiment of the present invention, when a working path is faulty, the source node S sends a preset rerouting search message to the network device 30, where the preset rerouting search message carries a faulty entity, an identifier of a service, and information about a first preset rerouting path; when determining that the first preset rerouting path S-C-B-T is not completely separated from a non-faulty path S-C-D-T of the service, the network device 30 searches a preset routing table, corresponding to the faulty entity, of the service to acquire a second preset rerouting path S-C-B-T; when obtaining through checking that the second preset rerouting path S-C-B-T is the same as the first preset rerouting path S-C-B-T, the network device 30 sends a second response message to the source node S, where the second response message carries indication information for not updating a preset rerouting path; and the source node S initiates establishment of the second preset rerouting path S-C-B-T. In this way, under any 2-connected physical topology of an ASON network, a preset rerouting path that is completely separated from a non-faulty path is established, thereby ensuring that switchover is implemented within 50 ms after the second fault, and ensuring high reliability of a service.

To sum up, in the present invention, a network device receives a preset rerouting search message sent by a source node of a service, where the preset rerouting search message includes information about a faulty entity, an identifier of the service, and information about a first preset rerouting path; determines a non-faulty path of the service according to the information about the faulty entity and the identifier of the service; when further determining that the first preset rerouting path is not completely separated from the non-faulty path of the service, searches a preset routing table, corresponding to the faulty entity, of the service to acquire a second preset rerouting path that does not pass through the faulty entity and has the fewest entities overlapping with entities in the non-faulty path of the service; and when determining that the second preset rerouting path is different from the first preset rerouting path, sends a first response message to the source node of the service, where the first response message carries indication information for updating a preset rerouting path, and information about the second preset rerouting path. In this way, under any 2-connected physical topology of an ASON network, a preset rerouting path that is completely separated from a non-faulty path is established, thereby ensuring that switchover is implemented within 50 ms after the second fault, and ensuring high reliability of a service.

The foregoing descriptions are merely embodiments of the present invention, and the protection scope of the present invention is not limited thereto. All equivalent structure or process changes made according to the content of this specification and accompanying drawings in the present invention or by directly or indirectly applying the present invention in other related technical fields shall fall within the protection scope of the present invention.

## Claims

1. A rerouting method, comprising:
receiving, by a network device, a preset rerouting search message sent by a source node of a service, wherein the preset rerouting search message comprises information about a faulty entity, an identifier of the service, and information about a first preset rerouting path;
determining a non-faulty path of the service according to the information about the faulty entity and the identifier of the service;
if it is determined that the first preset rerouting path is not completely separated from the non-faulty path of the service, searching a preset routing table, corresponding to the faulty entity, of the service to acquire the second preset rerouting path, wherein the second preset rerouting path does not pass through the faulty entity, and has the fewest entities overlapping with entities in the non-faulty path of the service; and
if it is determined that the second preset rerouting path is different from the first preset rerouting path, sending a first response message to the source node of the service, wherein the first response message carries indication information for updating a preset rerouting path, and information about the second preset rerouting path.

2. The method according to claim 1, wherein after the determining a non-faulty path of the service, the method further comprises:
if it is determined that the first preset rerouting path is completely separated from the non-faulty path of the service, sending a second response message to the source node of the service, wherein the second response message carries indication information for not updating a preset rerouting path.

3. The method according to claim 1 or 2, wherein after the acquiring the second preset rerouting path, the method further comprises:
if it is determined that the second preset rerouting path is the same as the first preset rerouting path, sending the second response message to the source node of the service.

4. The method according to claim 1, 2, or 3, wherein the determining a non-faulty path of the service according to the information about the faulty entity and the identifier of the service specifically comprises:
if it is determined, according to the information about the faulty entity, that a working path of the service is faulty, the non-faulty path of the service is a protection path of the service; or
if it is determined, according to the information about the faulty entity, that a protection path of the service is faulty, the non-faulty path of the service is a working path of the service.

5. The method according to any one of claims 1 to 4, wherein the searching a preset routing table, corresponding to the information about the faulty entity, of the service to acquire the second preset rerouting path specifically comprises:
searching the preset routing table corresponding to the information about the faulty entity; and
if the corresponding preset routing table is empty, computing, in real time, a new preset rerouting path to serve as the second preset rerouting path; or
if the corresponding preset routing table is not empty, directly acquiring an existing preset rerouting path to serve as the second preset rerouting path.

6. A rerouting method, comprising:
if a working path or a protection path of a service is faulty, sending a preset rerouting search message to a network device, so that if it is determined that a first preset rerouting path is not completely separated from a non-faulty path of the service, the network device searches a preset routing table, corresponding to a faulty entity, of the service to acquire a second preset rerouting path, wherein the preset rerouting search message comprises information about the faulty entity, an identifier of the service, and information about the first preset rerouting path; and the second preset rerouting path does not pass through the faulty entity, and has the fewest entities overlapping with entities in the non-faulty path of the service;
receiving a first response message sent by the network device, wherein the first response message carries indication information for updating a preset rerouting path, and information about the second preset rerouting path; and
initiating establishment of the second preset rerouting path.

7. The method according to claim 6, wherein before the sending a preset rerouting search message to a network device, establishment of the first preset rerouting path is initiated.

8. A network device, comprising:
a receiving module, configured to receive a preset rerouting search message sent by a source node of a service, wherein the preset rerouting search message comprises information about a faulty entity, an identifier of the service, and information about a first preset rerouting path;
a determining module, configured to determine a non-faulty path of the service according to the information about the faulty entity and the identifier of the service;
a path acquiring module, configured to: if it is determined that the first preset rerouting path is not completely separated from the non-faulty path of the service, search a preset routing table, corresponding to the faulty entity, of the service to acquire a second preset rerouting path, wherein the second preset rerouting path does not pass through the faulty entity, and has the fewest entities overlapping with entities in the non-faulty path of the service; and
a sending module, configured to: if it is determined that the second preset rerouting path is different from the first preset rerouting path, send a first response message to the source node of the service, wherein the first response message carries indication information for updating a preset rerouting path, and information about the second preset rerouting path.

9. The network device according to claim 8, wherein the sending module is further configured to: after the path acquiring module determines that the first preset rerouting path is completely separated from the non-faulty path of the service, send a second response message to the source node of the service, wherein the second response message carries indication information for not updating a preset rerouting path.

10. The network device according to claim 8 or 9, wherein after the path acquiring module acquires the second preset rerouting path, if it is determined that the second preset rerouting path is the same as the first preset rerouting path, the sending module further sends the second response message to the source node of the service.

11. The network device according to claim 8, 9, or 10, wherein the determining module is specifically configured to:
if it is determined, according to the information about the faulty entity, that a working path of the service is faulty, determine that the non-faulty path of the service is a protection path of the service; or
if it is determined, according to the information about the faulty entity, that a protection path of the service is faulty, determine that the non-faulty path of the service is a working path of the service.

12. The network device according to claim 8, wherein the path acquiring module is specifically configured to:
search the preset routing table corresponding to the information about the faulty entity; and
if the corresponding preset routing table is empty, compute, in real time, a new preset rerouting path to serve as the second preset rerouting path; or
if the corresponding preset routing table is not empty, directly acquire an existing preset rerouting path to serve as the second preset rerouting path.

13. A node, comprising:
a sending module, configured to: if a working path or a protection path of a service is faulty, send a preset rerouting search message to a network device, so that if it is determined that a first preset rerouting path is not completely separated from a non-faulty path of the service, the network device searches a preset routing table, corresponding to a faulty entity, of the service to acquire a second preset rerouting path, wherein the preset rerouting search message comprises information about the faulty entity, an identifier of the service, and information about the first preset rerouting path; and the second preset rerouting path does not pass through the faulty entity, and has the fewest entities overlapping with entities in the non-faulty path of the service;
a receiving module, configured to receive a first response message sent by the network device, wherein the first response message carries indication information for updating a preset rerouting path, and information about the second preset rerouting path; and
a rerouting module, configured to initiate establishment of the second preset rerouting path.

14. The node according to claim 13, wherein the rerouting module is configured to: before the sending module sends the preset rerouting search message to the network device, initiate establishment of the first preset rerouting path.

15. A rerouting system, wherein the system comprises the network device according to any one of claims 8 to 12, and the node according to claim 13 or 14.
